# EUROPÄISCHE PATENTSCHRIFT

(11) **EP 3 921 159 B1**
(45) Veröffentlichungstag und Bekanntmachung des Hinweises auf die Patenterteilung: **21.08.2024**
(21) Anmeldenummer: 20702161.9
(22) Anmeldetag: 04.02.2020
(51) Int. Cl.: B22F 12/50, B22F 12/67, B29C 64/205, B33Y 30/00, B22F 7/06

(54) **VORRICHTUNG ZUR HERSTELLUNG VON BAUTEILEN MITTELS ADDITIVER FERTIGUNGSVERFAHREN**
DEVICE FOR PRODUCING COMPONENTS USING ADDITIVE MANUFACTURING
DISPOSITIF DE FABRICATION DE COMPOSANTS AU MOYEN D'UN PROCÉDÉ DE FABRICATION ADDITIVE

(30) Priorität: 04.02.2019 EP 19155205
(43) Veröffentlichungstag der Anmeldung: 15.12.2021
(73) Patentinhaber: Kyocera Fineceramics Europe GmbH, 68229 Mannheim (DE)
(72) Erfinder: KATSIKIS, Nikolaos, 95666 Pleussen (DE); DIENER, Sarah, 95100 Selb (DE); RUSSNER, Carsten, 91207 Lauf a.d. Pegnitz (DE); DA SILVA LIMA, Pedro Henrique, 95111 Rehau (DE)
(74) Vertreter: dompatent von Kreisler Selting Werner - Partnerschaft von Patent- und Rechtsanwälten mbB
(86) Internationale Anmeldenummer: PCT/EP2020/052746
(87) Internationale Veröffentlichungsnummer: WO 2020/161132

(56) Entgegenhaltungen:
- WO-A1-2018/090186
- WO-A1-2019/020317
- WO-A1-2019/022759
- DE-A1- 102015 222 100
- DE-A1- 102018 210 530

## Beschreibung

Die vorliegende Erfindung betrifft eine Vorrichtung zum Auftragen von Schlickern, die einen Rakelkörper mit mindestens einem Trennelement umfasst, durch die der Rakelkörper in verschiedene Kammern unterteilt wird, sowie ein Verfahren zur Herstellung eines dreidimensionalen Objekts unter Verwendung der erfindungsgemäßen Vorrichtung.

Die kommerzielle Anwendung additiver Fertigungsverfahren erlaubt die kostengünstige Herstellung komplexer Bauteile und Kleinserien. Dabei wird ein pulverförmiger Werkstoff mittels einer Rakel auf eine Stützstruktur aufgebracht und entlang einer vorgegebenen Geometrie ausgehärtet bevor eine weitere Schicht des pulverförmigen Werkstoffs aufgebracht und ausgehärtet wird. Alternativ kann die vollständige Aushärtung auch nach dem Druckprozess erfolgen. Dieser Vorgang wird solange wiederholt bis der gewünschte, dreidimensionale Körper ausgebildet ist. Nachteilig bei diesen Verfahren ist, dass bei der Verwendung verschiedener Werkstoffe zur gezielten Ausbildung verschiedener Eigenschaften in dem herzustellenden dreidimensionalen Körper die Pulverzuführungen aufwendig zu leeren und anschließend neu zu befüllen sind, bevor der Rakel mit einem anderen Werkstoff genutzt werden kann oder alternativ mehrere Rakel verwendet werden müssen.

DE 19 2916 214 249 schlägt zur Lösung dieses Problems eine Vorrichtung zur generativen Fertigung eines dreidimensionalen Körpers in einem Pulverbett mit einem Fertigungsbereich, der eine absenkbare Oberfläche, auf der das Pulverbett angeordnet ist, und mindestens einer Rakel zur Förderung und zum gleichmäßigen Verteilen eines pulverförmigen Werkstoffs auf der Oberfläche vor. Die mindestens eine Rakel ist um eine Rotationsachse bewegbar, die senkrecht zur Oberfläche des Pulverbetts ausgerichtet ist und die Länge der Rakel entspricht mindestens dem größten Abstand von der Rotationsachse bis zum Rand des Fertigungsbereichs. An der mindestens einen Rakel sind Düsen zum Ausbringen des pulverförmigen Werkstoffs ausgebildet. Weiterhin sind an der Vorrichtung eine Einrichtung zum Zuführen des pulverförmigen Werkstoffs in der mindestens einen Rakel und zu den Düsen und eine Einrichtung zur Ausführung einer Rotationsbewegung der mindestens einen Rakel über die Oberfläche des Pulverbetts, und eine Einrichtung, mit der mindestens ein Energiestrahl auf die Oberfläche des Pulverbetts gerichtet werden kann und dessen Brennfleck zweidimensional bewegbar ist, angeordnet.

EP 3 3345 745 beschreibt eine Fertigungsanlage zur Herstellung eines Bauteils mittels additiver Fertigungsverfahren, bei der ein formloser Werkstoff schichtweise ausgebracht und basierend auf einem digitalen Datenmodel selektiv ausgehärtet wird, wobei die Fertigungsanlage einen Werkstoffvorratsspeicher, in dem ein primärer Werkstoff bereitgestellt wird, einen Bauteilraum, in dem der primäre Werkstoff schichtweise aufgebracht und selektiv ausgehärtet wird, mindestens eine Rakel, die über dem Bauteilraum bewegbar und zum schichtweisen Aufbringen des durch den Werkstoffvorratsspeicher bereitgestellten primären Werkstoffs während des Bewegens über dem Bauteils ausgebildet ist, und eine Energiequelle, die zum selektiven Aushärten des schichtweise aufgebrachten primären Werkstoffs ausgebildet ist, aufweist. Die beschriebene Fertigungsanlage zeichnet sich weiterhin dadurch aus, dass eine Rakel vorgesehen ist, die über dem Bauteilraum bewegbar und zum Ausbringen eines weiteren sekundären Werkstoffs während des Bewegens über den Bauteilraum ausgebildet ist, wobei die Rakel eine Werkstoffentferneinrichtung hat, die in wenigstens einem vorgegebenen Sekundärwerkstoffabschnitt zum selektiven Entfernen eines bereits ausgebrachten primären Werkstoffs ausgebildet ist. Auf diese Weise sollen Zusatzfunktionen in die zu fertigende Struktur eingebracht werden, wie beispielsweise elektronische Leitungen oder Isolatoren.

WO 2018/024757 betrifft eine Vorrichtung zur generativen Fertigung eines dreidimensionalen Körpers in einem Pulverbett mit einem Fertigungsbereich, der eine absenkbare Oberfläche, auf der das Pulverbett angeordnet ist, aufweist und mehreren Rakeln zur gleichmäßigen Verteilung eines zugeführten pulverförmigen Werkstoffs über die Oberfläche des Pulverbetts und einer Einrichtung, mit der mindestens ein Energiestrahl auf die Oberfläche des Pulverbetts gerichtet werden kann und dessen Brennpunkt zweidimensional bewegbar ist. Mit Hilfe der Rakel können verschiedene pulverförmige Werkstoffe und/oder pulverförmige Werkstoffe mit verschiedenen mittleren Partikelgrößenbereichen auf die Oberfläche des Pulverbetts aufgebracht werden.

DE 10 2015 010 386 offenbart eine Vorrichtung zur generativen Fertigung dreidimensionaler Objekte durch Mikro-Laserauftragsschmelzen, bei der die Rakel zum Auftragen einer einzelnen Pulverschicht als mit einem Pulverreservoir gefüllte Doppelrakel ausgebildet ist, um bei jeder Vorwärts- und jeder Rückwärtsbewegung der Doppelrakel eine Pulverschicht zu erzeugen, die im Bereich des auf einer Bauplattform aufzubauenden dreidimensionalen Objekts sofort mit dem Laser bestrahlt und verfestigt werden kann. Die Doppelrakel umfasst ein aus einem Pulvervorratsbehälter selbsttätig befüllbares Pulveraufnahmeteil mit einem in dessen Boden vorgesehenem Pulveraustrittsschlitz und ein an dessen Boden anschließendes, aus zwei parallelen Einzelrakeln bestehendes Doppelrakelteil mit von dem Pulveraustrittsschlitz ausgehenden Pulverleitflächen zum Verteilen des Pulvers bei jeder Vorwärts- und Rückwärtsbewegung der Doppelrakel.

Die im Stand der Technik vorgeschlagenen Lösungen weisen den Nachteil auf, dass eine komplizierte Ausgestaltung der Vorrichtung nötig ist, um Bauteile aus verschiedenen Materialien herzustellen. Des Weiteren erlauben die im Stand der Technik beschriebenen Vorrichtungen keine Herstellung von Bauteilen, bei denen der Übergang der unterschiedlichen Materialien oder Pulver fließend ist und die einen Gradienten aufweisen. Um diesem Problem Herr zu werden, werden im Stand der Technik Rakel vorgeschlagen, bei denen mit Hilfe verschiedener Dosierkammern oder Zwischenwänden verschiedene Pulverarten ausgebracht werden können.

So beschreibt DE 10 2015 222 100 ein Verfahren und eine Vorrichtung zum Herstellen eines dreidimensionalen Objekts durch schichtweises Aufbringen und selektives Verfestigen eines pulverförmigen Aufbaumaterials, bei dem die Vorrichtung einen über ein Baufeld bewegbaren Beschichter zum Aufbringen einer Schicht des Aufbaumaterials auf das Baufeld und eine Verfestigungsvorrichtung zum selektiven Verfestigen der aufgebrachten Schicht an Stellen, die einem Querschnitt des herzustellenden Objekts entsprechen, enthält und dazu ausgebildet und/oder gesteuert ist, die Schritte des Aufbringens und des selektiven Verfestigens zu wiederholen, bis das Objekt fertiggestellt ist, wobei die Vorrichtung eine Beschichtungseinheit enthält, die Folgendes aufweist: zwei in einer ersten Richtung voneinander beabstandete und sich in eine Richtung quer zu der ersten Richtung erstreckende Beschichtungselemente, die in der ersten Richtung und ihrer Gegenrichtung einen Aufnahmeraum für das pulverförmige Aufbaumaterial begrenzen, und eine Zwischenwand, die zwischen den beiden Beschichtungselementen in der ersten Richtung von beiden Beschichtungselementen beabstandet angeordnet ist und sich in eine Richtung quer zu der ersten Richtung erstreckt, wodurch der Aufnahmeraum für das Aufbaumaterial in zwei Kammern unterteilt ist, wobei die Beschichtungseinheit dazu eingerichtet ist: je nach Bewegung der Beschichtungseinheit in die erste Richtung oder in ihre Gegenrichtung Aufbaumaterial in der in der jeweiligen Bewegungsrichtung nachlaufenden Kammer aufzunehmen und das in der jeweils nachlaufenden Kammer aufgenommene Aufbaumaterial mit dem jeweils nachlaufenden Beschichtungselement zu einer gleichmäßigen Schicht auszuziehen.

WO 2019/020317 schlägt eine Anlage zum pulverbettbasierten additiven Herstellen eines Werkstücks mit mehreren Dosiervorrichtungen für verschiedene Pulverarten und Verfahren zu deren Betreiben vor. Für das Pulverbett ist eine Aufnahmevorrichtung vorgesehen, wobei das Pulverbett durch mehrere Dosiervorrichtungen aufgebracht werden kann. Erfindungsgemäß ist vorgesehen, dass jede der Dosiervorrichtungen einen Dosierschlitz aufweist, durch den eine bestimmte Pulverart auf das Pulverbett aufgebracht werden kann. Die Aufnahmevorrichtung und die Dosiervorrichtungen sind erfindungsgemäß relativ zueinander beweglich, so dass mit Hilfe des Dosierschlitzes die gesamte Oberfläche des Pulverbetts mit Pulver beaufschlagt werden kann. Vorteilhaft ist das Dosieren unterschiedlicher Pulverarten auf demselben Pulverbett bei gleichzeitig geringer Baugröße der Anlage möglich.

WO 2019/022759 beschreibt einen 3D-Drucker, der einen Behälter zur Ausgabe eines Aufbaumaterials aufweist, wobei der Behälter eine Drosselklappe enthält, mit der der Fluss des Aufbaumaterials variiert werden kann.

DE102018210530A1 ist ein Dokument, das eine Produktionsanlage zur Herstellung von Gegenständen durch schichtweisen Aufbau aus Materialschichten offenbart, mit einer Auftragsvorrichtung, die eine Zuführeinheit umfasst, die Materialschlicker und/oder Materialsuspension als Materialschicht aufträgt.

Bisher fokussieren sich die Bemühungen bei der Bereitstellung von Vorrichtungen, mit denen verschiedene Materialien ausgebracht werden können, insbesondere auf Pulver, da diese das übliche Material zur Herstellung eines dreidimensionalen Objekts sind. In einigen Anwendungen hat es sich jedoch gezeigt, dass die geforderten Eigenschaften mit Pulvern nicht erreicht werden, so dass es von Vorteil sein kann, das Material in Form eines Schlickers auszubringen, wodurch sich jedoch die technischen Anforderungen an die Ausgabevorrichtung ändern, so dass Vorrichtungen, die auf das Ausbringen von Pulvern angelegt sind, nicht zwangsläufig auch im Zusammenhang mit Schlickern einsetzbar sind. So weisen schlickerförmige Materialien insbesondere ein anderes Fließverhalten als rein pulverförmige Materialien auf. Weiterhin hat das Fließverhalten des Schlickers einen entscheidenden Einfluss auf die Qualität des herzustellenden Objekts, so dass diese Eigenschaft nicht nur bei der Entwicklung von Schlickern, sondern auch bei der technischen Umsetzung des Fertigungsverfahren eine erhebliche Rolle spielt.

Weiterhin stellt sich bei dem Einsatz von Zwischenwänden, mit denen die Rakel in unterschiedliche Bereiche geteilt werden kann, wie im Stand der Technik vorgeschlagen, das Problem, dass in den seltensten Fällen ein dichter Abschluss zwischen Zwischenwand und Rakel garantiert werden kann, insbesondere wenn die Zwischenwände beweglich angeordnet sein sollen. Durch den entstehenden Spalt kann es jedoch zu einer störenden Beeinflussung des Fließverhaltens des Materials bis hin zu Verstopfungen und Blockierungen kommen, was insbesondere bei der Verwendung von Schlickern die Qualität des herzustellenden Objekts erheblich mindert.

Es ist daher die Aufgabe der vorliegenden Erfindung eine Vorrichtung zur Verfügung zu stellen, die das Herstellen dreidimensionaler Artikel, die in horizontaler und/oder vertikaler Richtung unterschiedliche Eigenschaften und/oder Zusammensetzungen aufweisen, beispielsweise einen Gradienten, mit Hilfe von Schlickern in additiver Fertigungstechnik erlaubt und die die genannten Probleme des Standes der Technik überwindet.

Im Rahmen der vorliegenden Erfindung wurde überraschend gefunden, dass diese Aufgabe durch die Bereitstellung einer Vorrichtung gelöst wird, die eine speziell ausgebildete Rakel mit mehreren voneinander getrennten Kammern aufweist.

Daher ist ein erster Gegenstand der vorliegenden Erfindung eine Vorrichtung zum Auftragen von Schlickern, wobei die Vorrichtung einen Rakelkörper mit einer Arbeitskante umfasst, wobei der Rakelkörper über mindestens einen Ausgabeschlitz zur Ausgabe eines Schlickers verfügt, der parallel zur Arbeitskante angeordnet ist, dadurch gekennzeichnet, dass der Rakelkörper durch mindestens ein senkrecht zu seiner Längsrichtung angeordnetes bewegliches Trennelement in Kammern unterteilt ist, wobei zwischen den Seitenwänden des mindestens einen Trennelements und der angrenzenden Rakeloberfläche ein Spalt mit einer Breite von mindestens 100 µm ausgebildet ist.

Im Rahmen der vorliegenden Erfindung sind die Bezeichnungen "angrenzend" und "gegenüberliegend" als gleichwertig anzusehen, sofern nichts anderes ausgeführt ist.

Es wurde überraschend gefunden, dass durch die erfindungsgemäße Ausgestaltung des Rakelkörpers dreidimensionale Objekte aus Schlickern hergestellt werden können, die über die Ausdehnung des Objekts variierende Zusammensetzungen und/oder Eigenschaften aufweisen, beispielsweise einen Gradienten, wobei Gradient im Sinne der vorliegenden Erfindung eine kontinuierliche Variation der Zusammensetzung oder der Eigenschaften über eine bestimmte Strecke innerhalb oder auf der Oberfläche eines Objekts bezeichnet. Herkömmlicherweise wird die Ausbildung eines Gradienten in einem Objekt über einen Wechsel der Vorratsbehälter für das Aufbaumaterial realisiert, wobei sich die Ausbildung des Gradienten jedoch auf die z-Richtung beschränkt. Es wurde nun überraschend gefunden, dass durch die erfindungsgemäße Vorrichtung auch Gradienten in x- und/oder y-Richtung ausgebildet werden können.

Weiterhin hat sich gezeigt, dass durch die erfindungsgemäße Ausgestaltung, die einen Spalt von mindestens 100 µm zwischen den Seitenwänden des Trennelements und der angrenzenden beziehungsweise gegenüberliegenden Rakeloberfläche vorsieht, entgegen der allgemeinen Erwartung das Fließverhalten des Schlickers nicht negativ beeinflusst wird, sondern auf diese Weise vielmehr die Bewegungsfreiheit des Trennelements erhalten bleibt und kontinuierliche Ausgabe des Schlickers möglich ist. Der Spalt ist vorzugsweise durchgehend und verläuft parallel zur Seitenwand des Trennelements. In einer besonders bevorzugten Ausführungsform weist der Spalt eine Breite von mindestens 200 µm, vorzugsweise mindestens 300 µm auf. Vorzugsweise weist der Spalt eine maximale Breite von 1000 µm, vorzugsweise von maximal 700 µm und besonders bevorzugt von maximal 500 µm auf. In einer besonders bevorzugten Ausführungsform weist der Spalt eine Breite auf, die mindestens dem Doppelten, vorzugsweise dem Dreifachen des D90-Werts der im Schlicker enthaltenen Partikel entspricht. In einer weiterhin bevorzugten Ausführungsform weist der Spalt eine Breite auf, die mindestens dem Doppelten, vorzugsweise dem Dreifachen des D98-Werts der im Schlicker enthaltenen Partikel entspricht Die Partikelgröße kann dabei mittels Laserbeugung bestimmt werden, während der D90- beziehungsweise der D98-Wert der Partikelgrößenverteilung die Fraktion der Partikel bezeichnet, nämlich 90% beziehungsweise 98%, die einen Wert kleiner oder gleich dem bestimmten Wert aufweisen.

Um die Beweglichkeit des Trennelement bei gleichzeitig positivem Fließverhalten des Schlickers zu gewährleisten, hat es sich ebenfalls als vorteilhaft erwiesen, ein Dichtungselement zu verwenden, das zwischen der/den Seitenwänden des Trennelements und der angrenzenden Rakeloberfläche angeordnet ist. Daher ist eine Ausführungsform bevorzugt, in der zwischen dem mindestens einen Trennelement und der angrenzenden Rakeloberfläche ein Dichtungselement angeordnet ist. Es wurde überraschend gefunden, dass mit Hilfe des Dichtungselements eine Störung des Fließverhaltens des Schlickers und eine Vermischung der in den unterschiedlichen Kammern des Rakelkörpers enthaltenen Schlicker verhindert werden kann, ohne dass die Beweglichkeit des Trennelements eingeschränkt wird. In einer bevorzugten Ausführungsform ist das Dichtungselement in Form eines Dichtungsrings, einer O-Ring-Dichtung oder einer Lippendichtung ausgestaltet, die zwischen dem Trennelement und der angrenzenden Rakeloberfläche angeordnet ist.

Als besonders vorteilhaft hat es sich erwiesen, dass Dichtungselement in Form von rillenförmigen Vertiefungen oder Zähnen auszugestalten, die zwischen der Seitenwand des Trennelements und der gegenüberliegenden Rakeloberfläche angeordnet sind. Daher ist eine Ausführungsform bevorzugt, in der das Dichtungselement in Form von rillenförmigen Vertiefungen oder Zähnen, die an der der gegenüberliegenden Rakeloberfläche zugewandten Seitenwand des Trennelements angeordnet sind, vorliegt. Die rillenförmigen Vertiefungen oder Zähne erstrecken sich vorzugsweise in Längsrichtung entlang der Seitenwände des Trennelements. Besonders bevorzugt sind die rillenförmigen Vertiefungen oder Zähne direkt aus der Seitenwand des Trennelements herausgearbeitet und bilden einen integralen Teil des Trennelements. Die Seitenwand des Trennelements bezeichnet dabei die Schmalseite des Trennelements, die der Rakeloberfläche gegenüber liegt.

Besonders bevorzugt ist das Dichtungselement aus einem Material, das ausgewählt ist aus der Gruppe bestehend aus Gummi, Kunststoff und Teflon. Auf diese Weise wird eine Beschädigung der Rakeloberfläche, beispielsweise bei Bewegung des Trennelements, vermieden.

Der Abstand zwischen der Seitenwand des Trennelements und der gegenüberliegenden Rakeloberfläche ist vorzugsweise so gewählt, dass eine ausreichende Beweglichkeit des Trennelements gewährleistet ist.

Die Dicke des Dichtungselements ist vorzugsweise so gewählt, dass der Zwischenraum zwischen der Seitenwand des Trennelements und der gegenüberliegenden Rakeloberfläche komplett gefüllt ist. Dazu hat es sich als besonders vorteilhaft erwiesen, wenn die Zähne in etwa die doppelte Länge des Abstands zwischen der Seitenwand des Trennelements und der gegenüberliegenden Rakeloberfläche aufweisen. Daher ist eine Ausführungsform besonders bevorzugt, in der die Höhe der Zähne dem Abstand zwischen der Seitenwand des Trennelements und der gegenüberliegenden Rakeloberfläche entspricht. Besonders bevorzugt entspricht die Höhe der Zähne dem 1,5-fachen bis 3-fachen, insbesondere dem 1,5-fachen bis 2,5-fachen des Abstands zwischen der Seitenwand des Trennelements und der gegenüberliegenden Rakeloberfläche.

Um den gewünschten Übergang zwischen den verschiedenen Materialen zu ermöglichen, hat es sich als besonders vorteilhaft erwiesen, wenn sich der mindestens eine Ausgabeschlitz über die gesamte Breite des Rakelkörpers erstreckt. In einer bevorzugten Ausführungsform weist der Ausgabeschlitz an mindestens einer seiner beiden Kanten eine Lippe auf, mit der der Fluss des Schlickers gesteuert werden kann. Auf diese Weise kann zwischen unterschiedlichen Ausgabemodi, wie curtain coating-Modus, bead coating-Modus, web tensioned coating-Modus und extrusion coating-Modus, variiert werden.

Die erfindungsgemäße Vorrichtung erlaubt die flexible Anpassung von Materialien und Eigenschaften eines Objekts während seiner Herstellung. Daher ist eine Ausführungsform bevorzugt, in der Kammern im Rakelkörper reversible voneinander getrennt sind.

Als besonders vorteilhaft hat es sich im Rahmen der vorliegenden Erfindung erwiesen, wenn die Größe und die Anzahl der Kammern im Rakelkörper variiert werden können. Daher ist eine Ausführungsform bevorzugt, in der die Größe und/oder Anzahl der Kammern im Rakelkörper variabel ist. In einer besonders bevorzugten Ausführungsform handelt es sich bei dem mindestens einen Trennelement um eine oder mehrere bewegliche Lamellen, die insbesondere schwenkbar sind. In einer besonders bevorzugten Ausführungsform handelt es sich bei der mindestens einen Trennelement um bewegliche Trennwände, die horizontal, vertikal und/oder schwenkbar variiert werden können.

Um eine effiziente und kontinuierliche Materialzufuhr zu gewährleisten kann der Rakelkörper mit Eingangseinheiten zur Einleitung des Schlickers ausgestattet sein. In einer bevorzugten Ausführungsform verfügt der Rakelkörper weiterhin über zwei oder mehr Eingangseinheiten, durch die der Schlicker in den Rakelkörper eingebracht werden kann. Die Eingangseinheiten führen dabei vorzugsweise in jeweils getrennte Kammern im Rakelkörper. Weiterhin verfügen die Eingangseinheiten vorzugsweise über Anschlusselemente zum Anschließen an einen Vorratsbehälter.

Über die Eingangseinheiten kann der Schlicker dem Rakelkörper zugeführt werden. Um die Ausbildung eines Gradienten in einem Objekt zu realisieren, hat es sich als vorteilhaft erwiesen, wenn die Schlicker unterschiedlich sind. Daher ist eine Ausführungsform bevorzugt, in der die dem Rakelkörper über die Eingangseinheiten zugeführten Schlicker gleich oder verschieden, insbesondere verschieden sind. Der Schlicker wird dabei vorzugsweise mittels einer Dosierpumpe in die entsprechende Kammer des Rakelkörpers eingebracht, wo der Fluss des Schlickers homogeniert werden kann, bevor er durch den Ausgabeschlitz ausgebracht wird.

Um die Freiheitsgrade bei der Herstellung dreidimensionaler Objekte zu erhöhen, kann die Vorrichtung weiterhin über Mischaggregate verfügen. Daher ist eine Ausführungsform bevorzugt, in der die Vorrichtung weiterhin über ein oder mehrere Mischaggregate verfügt, vorzugsweise statische Mischer, die mit den Eingangseinheiten verbunden sind.

Die erfindungsgemäße Vorrichtung ist insbesondere für die Herstellung von Objekten mittels schichtweisen Aufbaus geeignet. Daher verfügt die erfindungsgemäße Vorrichtung in einer bevorzugten Ausführungsform weiterhin über einen Fertigungsbereich mit einer beweglichen Oberfläche, auf der ein Bauteilraum angeordnet ist, in dem die Schlicker ausgebracht und selektiv ausgehärtet werden.

Um eine präzise Fertigung des gewünschten Objekts zu gewährleisten, verfügt die erfindungsgemäße Vorrichtung in einer bevorzugten Ausführungsform weiterhin über eine Steuereinheit zum Steuern des Rakelkörpers.

Die erfindungsgemäße Vorrichtung ist insbesondere für die Herstellung von Objekten ausgerichtet, die einen Gradienten aufweisen oder für Materialsysteme aus zwei oder mehr Schichten. Daher ist ein weiterer Gegenstand der vorliegenden Erfindung ein Verfahren zur Herstellung eines dreidimensionalen Objekts mittels additiver Fertigungsverfahren, wobei ein oder mehrere Schlicker mit der erfindungsgemäßen Vorrichtung schichtweise auf einer Oberfläche ausgebracht und entsprechend einer vorbestimmten Geometrie selektiv ausgehärtet werden. Besonders bevorzugt wird im Rahmen des erfindungsgemäßen Verfahrens mit Hilfe der erfindungsgemäßen Vorrichtung eine erste Schicht eines Schlickers auf eine Stützstruktur aufgetragen und getrocknet. Auf die getrocknete Schicht wird eine weitere Schicht Schlicker aufgebracht und getrocknet, wobei die Stützstruktur nach jedem Schichtauftrag des Schlickers um eine Schichthöhe erniedrigt wird. Um das gewünschte Objekt zu erhalten, wird vorzugsweise ein Binder gemäß dem gewünschten Querschnitt ausgebracht, wobei der Binder ja nach Schichtdicke nach jeder Schicht oder erst nach mehreren Schichten aufgebracht werden kann. Durch Aushärten des Binders und Entfernen des überschüssigen Materials wird dann das fertige Objekt erhalten. Überraschenderweise wurde im Rahmen der vorliegenden Erfindung festgestellt, dass durch die Verwendung von Schlickern eine hohe Packungsdichte und eine gute Anbindung zwischen den Schichten erreicht werden kann. Weiterhin hat sich überraschend gezeigt, dass durch das Trockenen jeder Schicht ein Objekt mit einer hohen Gründichte erhalten wird, die durch die Verwendung von Pulvern, wie in herkömmlichen Prozessen, nicht erreicht wurde.

Die Verwendung der erfindungsgemäßen Vorrichtung erlaubt insbesondere die Herstellung von Objekten, die eine kontinuierlich oder diskret variierende Zusammensetzung und/oder Eigenschaften aufweisen. Daher ist eine Ausführungsform des erfindungsgemäßen Verfahrens bevorzugt, in der das dreidimensionale Objekt über eine über Teile oder die Gesamtheit des Objekts variierende Zusammensetzung und/oder Eigenschaften aufweist, insbesondere in x- und/oder y-Richtung. Besonders bevorzugt weist das Objekt einen oder mehrere Gradienten auf, der sich ganz oder teilweise über das Objekt erstreckt. In einer alternativ bevorzugten Ausführungsform weist das Objekt diskrete Bereiche mit unterschiedlichen Eigenschaften und/oder Zusammensetzungen auf. Die Zusammensetzung und/oder die Eigenschaften des Objekts können über die Auswahl geeigneter Schlicker angepasst werden. In einer bevorzugten Ausführungsform werden Schlicker verwendet, die 60 bis 95 Gewichtsprozent Feststoff bezogen auf ihre Gesamtmasse aufweisen und Partikel mit einer mittleren Partikelgröße zwischen 0,1 und 100 µm, bestimmt mittels Laserbeugung, enthalten. Die Schlicker setzen sich aus keramischen Partikeln wie Siliziumcarbid oder Siliziumnitrid, Dispergatoren, Sinter- oder Prozesshilfsmittel wie Kohlenstoffquellen wie Graphit oder Ruß sowie organischen Zusätzen wie Bindemittel zusammen.

Ein Artikel kann gemäß dem erfindungsgemäßen Verfahren und/oder mit der erfindungsgemäßen Vorrichtung erhalten werden.

Vorzugsweise handelt es sich bei dem Artikel um ein dreidimensionales Objekt, das einen oder mehrere Gradienten oder diskrete Bereiche mit unterschiedlichen Eigenschaften und/oder Zusammensetzungen aufweist. Durch das erfindungsgemäße Verfahren sind insbesondere Objekte erhältlich, die sich durch eine hohe Präzision auszeichnen. Gleichzeitig können Materialien verwendet werden, die dem Objekt eine hohe Festigkeit und Härte verleihen, wie sie beispielsweise für Werkzeuge wie beispielsweise Bohrköpfe, benötigt werden. Daher handelt es sich bei dem Objekt insbesondere um einen Bohrkopf. Weiterhin erlaubt das erfindungsgemäße Verfahren und die erfindungsgemäße Vorrichtung die präzise Einstellung der Eigenschaften des Objekts, wie sie beispielsweise bei Hochpräzisionsanwendungen, beispielsweise in der Halbleiterherstellung, gefordert werden. Daher handelt es sich bei dem Objekt alternativ bevorzugt um Waver-chucks.

Ein weiterer Gegenstand nicht Teil der Erfindung ist die Verwendung der erfindungsgemäßen Vorrichtung zur Herstellung eines dreidimensionalen Objekts. Vorzugsweise weist das dreidimensionale Objekt eine kontinuierlich oder diskret variierende Zusammensetzung und/oder Eigenschaften auf, insbesondere in x- und/oder y-Richtung.

Die erfindungsgemäße Vorrichtung ist insbesondere für den Einsatz in additiven Fertigungsverfahren geeignet. Daher ist ein weiterer Gegenstand der vorliegenden Erfindung die Verwendung der erfindungsgemäßen Vorrichtung in additiven Fertigungsverfahren, insbesondere Laser Selective Sintering und Binder Jetting. Die vorliegende Erfindung wird anhand der folgenden Figuren näher erläutert, die jedoch keinesfalls als Einschränkung des Erfindungsgedankens zu verstehen sind.

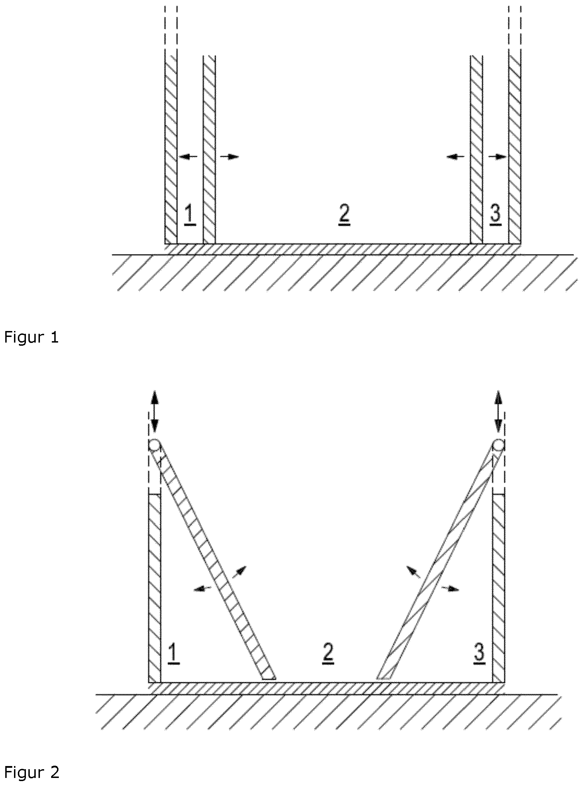

Figur 1 zeigt schematisch eine bevorzugte Ausführungsform der Erfindung, bei der der Rakelkörper mittels beweglicher Trennwände in unterschiedliche Kammern (1, 2, 3) aufteilbar ist, in die entsprechend unterschiedliche Schlicker eingebracht werden können.

Figur 2 zeigt schematisch eine bevorzugte Ausführungsform der Erfindung, bei der die Trennwände schwenkbar ausgebildet sind. Auf diese Weise kann der Rakelkörper in verschiedene Kammern (1, 2, 3) geteilt werden, was eine gezielte Mischung der in den Kammern enthaltenen Materialien im Rakelkörper zur Einstellung eines Gradienten in dem herzustellenden Objekt erlaubt.

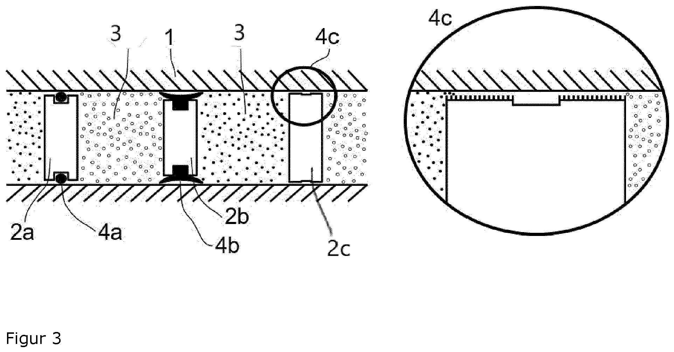

Figur 3 zeigt eine exemplarische Draufsicht auf alternativ bevorzugte Ausführungsformen der erfindungsgemäßen Vorrichtung, in denen der Rakelkörper (1) mit Hilfe von Trennelementen (2) in verschiedene Kammern (3) unterteilt ist, wobei als Dichtungselemente (4) eine O-Ringdichtung (A), eine Lippendichtung (B) oder ein Dichtungselement in Form von rillenförmigen Vertiefungen oder Zähnen (C) verwendet werden.

## Patentansprüche

1. Vorrichtung zum Auftragen von Schlickern, wobei die Vorrichtung einen Rakelkörper (1) mit einer Arbeitskante umfasst, wobei der Rakelkörper (1) über mindestens einen Ausgabeschlitz zur Ausgabe eines Schlickers verfügt, der parallel zur Arbeitskante angeordnet ist, **dadurch gekennzeichnet, dass** der Rakelkörper (1) durch mindestens ein senkrecht zu seiner Längsrichtung angeordnetes bewegliches Trennelement (2) in Kammern (3) unterteilt ist, wobei zwischen den Seitenwänden des mindestens einen Trennelements (2) und der angrenzenden Rakeloberfläche ein Spalt mit einer Breite von mindestens 100 µm ausgebildet ist.

2. Vorrichtung gemäß Anspruch 1, **dadurch gekennzeichnet, dass** in dem Spalt ein Dichtungselement (4) angeordnet ist, wobei das Dichtungselement (4) vorzugsweise in Form eines Dichtungsrings, einer O-Ring-Dichtung, oder einer Lippendichtung vorliegt.

3. Vorrichtung gemäß Anspruch 2, **dadurch gekennzeichnet, dass** das Dichtungselement (4) in Form von rillenförmigen Vertiefungen oder Zähnen, die an der der angrenzenden Rakeloberfläche zugewandten Seitenwand des Trennelements (2) angeordnet sind, vorliegt.

4. Vorrichtung gemäß wenigstens einem der Ansprüche 2 oder 3, **dadurch gekennzeichnet, dass** die rillenförmigen Vertiefungen oder Zähne direkt aus dem Trennelement (2) herausgearbeitet sind.

5. Vorrichtung gemäß wenigstens einem der vorangehenden Ansprüche, **dadurch gekennzeichnet, dass** es sich bei dem Dichtungselement (4) um ein Dichtungselement (4) aus einem Material ausgewählt aus der Gruppe bestehend aus Gummi, Kunststoff und Teflon handelt.

6. Vorrichtung gemäß einem oder mehrerer der vorangehenden Ansprüche, **dadurch gekennzeichnet, dass** sich der mindestens eine Ausgabeschlitz über die gesamte Breite des Rakelkörpers (1) erstreckt.

7. Vorrichtung gemäß einem oder mehrerer der vorangehenden Ansprüche, **dadurch gekennzeichnet, dass** der Rakelkörper (1) über mindestens zwei voneinander reversibel getrennte Kammern (3) verfügt.

8. Vorrichtung gemäß einem oder mehrerer der vorangehenden Ansprüche, **dadurch gekennzeichnet, dass** die Größe und/oder die Anzahl der Kammern (3) im Rakelkörper variable ist.

9. Vorrichtung gemäß einem oder mehrerer der vorangehenden Ansprüche, **dadurch gekennzeichnet, dass** es sich bei dem mindestens einen Trennelement (2) um ein oder mehrere bewegliche Lamellen handelt.

10. Vorrichtung gemäß einem oder mehrerer der vorangehenden Ansprüche, **dadurch gekennzeichnet, dass** der Rakelkörper weiterhin über zwei oder mehreren Eingangseinheiten verfügt, die jeweils über Anschlusselemente zum Anschließen an einen Vorratsbehälter verfügen.

11. Vorrichtung gemäß einem oder mehrerer der vorangehenden Ansprüche, **dadurch gekennzeichnet, dass** die dem Rakelkörper über die Eingangseinheiten zugeführten Schlicker gleich oder verschieden sind.

12. Verfahren zur Herstellung eines dreidimensionalen Artikels oder einer Folie mittels additiver Fertigung, **dadurch gekennzeichnet, dass** ein oder mehrere Schlicker mit einer Vorrichtung gemäß einem oder mehrerer der Ansprüche 1 bis 11 schichtweise auf einer Oberfläche ausgebracht und entsprechend einer vorbestimmten Geometrie selektiv ausgehärtet werden.

13. Verfahren gemäß Anspruch 12, **dadurch gekennzeichnet, dass** der dreidimensionale Artikel eine über einen Teil oder die Gesamtheit des Artikels variierende Zusammensetzung und/oder Eigenschaften aufweist, insbesondere in x- und/oder y-Richtung.

14. Verwendung einer Vorrichtung gemäß mindestens einem der Ansprüche 1 bis 11 in additiven Fertigungsprozessen, insbesondere Laser Selective Sintering und Binder Jetting.

## Claims

1. A device for applying slips, said device comprising a doctor blade body (1) having a working edge, wherein said doctor blade body (1) has at least one delivery slot for delivering a slip, which slot is provided parallel to said working edge, **characterized in that** said doctor blade body (1) is divided into compartments (3) by at least one moveable separation element (2) arranged vertically to its longitudinal direction, wherein a gap having a width of at least 100 µm has been formed between the lateral walls of said at least one separation element (2) and the adjacent doctor blade surface.

2. The device according to claim 1, **characterized in that** a sealing element (4) is provided in said gap, wherein said sealing element (4) is preferably in the form of a gasket, an O ring seal, or a lip seal.

3. The device according to claim 2, **characterized in that** said sealing element (4) is in the form of groove-shaped recesses or teeth provided at the lateral wall of the separation element (2) that faces towards the adjacent doctor blade surface.

4. The device according to at least one of claims 2 or 3, **characterized in that** said groove-shaped recesses or teeth have been directly worked from said separation element (2).

5. The device according to at least one of the preceding claims, **characterized in that** said sealing element (4) is a said sealing element (4) made of a material selected from the group consisting of rubber, plastic, and teflon.

6. The device according to one or more of the preceding claims, **characterized in that** said at least one delivery slot extends over the entire width of the doctor blade body (1).

7. The device according to one or more of the preceding claims, **characterized in that** said doctor blade body (1) has at least two compartments (3) reversibly separated from one another.

8. The device according to one or more of the preceding claims, **characterized in that** the size and/or the number of the compartments (3) in the doctor blade body is variable.

9. The device according to one or more of the preceding claims, **characterized in that** said at least one separation element (2) is one or more moveable slats.

10. The device according to one or more of the preceding claims, **characterized in that** said doctor blade body further has two or more inlet units, each of which has connecting elements for connecting to a storage container.

11. The device according to one or more of the preceding claims, **characterized in that** the slips supplied to the doctor blade body through the inlet units are the same or different.

12. A process for manufacturing a three-dimensional article or a sheet by additive manufacturing, **characterized in that** one or more slips are applied to a surface layer by layer using a device according to one or more of claims 1 to 11, and selectively cured in accordance with a predetermined geometry.

13. The process according to claim 12, **characterized in that** said three-dimensional article has a composition and/or properties that vary over part or the whole of said article, especially in the x and/or y direction.

14. Use of a device according to at least one of claims 1 to 11 in additive manufacturing processes, especially laser selective sintering and binder jetting.

## Revendications

1. Dispositif pour appliquer des bouillies, ledit dispositif comprenant un corps de raclette (1) avec une arête de travail, dans lequel ledit corps de raclette (1) présente au moins une fente de distribution pour distribuer une bouillie, la fente étant arrangée en parallèle à l'arête, **caractérisé en ce que** ledit corps de raclette (1) est divisé en compartiments (3) par au moins un élément de séparation (2) mobile arrangé de façon perpendiculaire à sa direction longitudinale, dans lequel une lacune ayant une largeur d'au moins 100 µm est formée entre les parois latérales dudit au moins un élément de séparation (2) et la surface adjacente de la raclette.

2. Dispositif selon la revendication 1, **caractérisé en ce que** un élément de scellement (4) est procuré dans la lacune, dans lequel ledit élément de scellement (4) est de préférence sous la forme d'une bague d'étanchéité, d'un joint torique, ou d'un joint à lèvres.

3. Dispositif selon la revendication 2, **caractérisé en ce que** ledit élément de scellement (4) est sous la forme d'évidements ou dents en forme de rainures, qui sont situés sur la paroi latérale dudit élément de séparation (2) en face de la surface adjacente de la raclette.

4. Dispositif selon au moins l'une des revendications 2 ou 3, **caractérisé en ce que** lesdits évidements ou dents en forme de rainures sont travaillés pour sortir directement dudit élément de séparation (2).

5. Dispositif selon au moins l'une des revendications précédentes, **caractérisé en ce que** ledit élément de scellement (4) est un élément de scellement (4) en un matériau choisi dans le groupe consistant en caoutchouc, plastique, et Téflon.

6. Dispositif selon l'une ou plusieurs des revendications précédentes, **caractérisé en ce que** ladite au moins une fente de distribution s'étend sur toute la largeur dudit corps de raclette (1).

7. Dispositif selon l'une ou plusieurs des revendications précédentes, **caractérisé en ce que** ledit corps de raclette (1) présente au moins deux compartiments (3) séparés de façon réversible l'un de l'autre.

8. Dispositif selon l'une ou plusieurs des revendications précédentes, **caractérisé en ce que** la taille et/ou le nombre desdits compartiments (3) dans le corps de raclette est variable.

9. Dispositif selon l'une ou plusieurs des revendications précédentes, **caractérisé en ce que** ledit au moins un élément de séparation (2) est une ou plusieurs lamelles mobiles.

10. Dispositif selon l'une ou plusieurs des revendications précédentes, **caractérisé en ce que** ledit corps de raclette présente en outre deux ou plusieurs unités d'entrée, dont chacune présente des éléments de raccordement pour raccorder à un réservoir.

11. Dispositif selon l'une ou plusieurs des revendications précédentes, **caractérisé en ce que** les bouillies alimentées au corps de raclette via lesdites unités d'entrée sont identiques ou différentes.

12. Procédé pour fabriquer un article tridimensionnel ou d'une feuille par fabrication additive, **caractérisé en ce que** une ou plusieurs bouillies sont épandues en utilisant un dispositif selon l'une ou plusieurs des revendications 1 à 11 en couches successives sur une surface, et durcies sélectivement conformément à une géométrie prédéterminée.

13. Procédé selon la revendication 12, **caractérisé en ce que** ledit article tridimensionnel présente une composition et/ou des propriétés qui varient sur une partie ou sur tout l'article, notamment dans la direction x et/ou y.

14. Utilisation d'un dispositif selon au moins l'une des revendications 1 à 11 dans des procédés de fabrication additifs, notamment par frittage laser sélectif et lançage de liant.
